# EUROPEAN PATENT APPLICATION

(11) **EP 4 037 130 A2**
(43) Date of publication of application: **03.08.2022**
(21) Application number: 22150631.4
(22) Date of filing: 10.01.2022
(51) Int. Cl.: H02J 3/32, B60L 53/62, B60L 53/63, B60L 53/68, H02J 7/00, H02J 13/00

(54) **SERVER, POWER MANAGEMENT SYSTEM, AND ENERGY MANAGEMENT METHOD**

(30) Priority: 28.01.2021 JP 2021011921
(71) Applicant: TOYOTA JIDOSHA KABUSHIKI KAISHA, Toyota-shi, Aichi-ken, 471-8571 (JP)
(72) Inventor: NAKAMURA, Toru, TOYOTA-SHI, AICHI-KEN, 471-8571 (JP)
(74) Representative: Cabinet Beau de Loménie

(57) **Abstract**

An energy management method includes determining whether or not charging power reduction control has been carried out in a battery (130) that is being charged (S22 and S23) and performing processing for compensating for decrease in charging power due to charging power reduction control (S24 and S25) when it is determined that charging power reduction control has been carried out in the battery that is being charged (YES in S22 and S23).

## Description

This nonprovisional application is based on Japanese Patent Application No. 2021-011921 filed with the Japan Patent Office on January 28, 2021, the entire contents of which are hereby incorporated by reference.

### BACKGROUND

### Field

The present disclosure relates to a server, a power management system, and an energy management method.

### Description of the Background Art

Japanese Patent Laying-Open No. 2018-161018 discloses an aggregation system that manages energy by demand response (DR). A composite power conversion device in this aggregation system starts up objects to be controlled in the descending order of a response speed upon receiving a control command in connection with DR from a server. The aggregation system corresponds to an exemplary power management system.

### SUMMARY

When a battery (a first battery) that is being charged is fully charged, by starting charging of another battery (a second battery) instead of that battery, sufficient charging power can be secured for a long time period. For example, a server determines whether or not the first battery has fully been charged based on a state of charge (SOC) of the first battery that is being charged, and when the first battery is fully charged, the server transmits a charging start command to a second battery so as to successively charge the first battery and the second battery. The server can manage energy through charging of the batteries as above.

The server, however, is not necessarily able to obtain the SOC of the battery. For example, a server capable of obtaining information from a vehicle is limited. In general, a server that is unable to communicate with a vehicle is unable to obtain the SOC of the battery mounted on the vehicle.

A method of transmitting a charging start command from a server to a battery in accordance with a predetermined charging plan is also available as a method of successively charging a plurality of batteries as instructed by the server. In such a method, when charging end timing of a first battery shown in the charging plan comes, the charging start command is transmitted from the server to a second battery. The server can specify charging end timing of the first battery by referring to the charging plan without the knowledge of a charging condition of the first battery. Charging of the first battery, however, is not necessarily carried out as planned in the charging plan. When charging of the first battery ends earlier than end timing shown in the charging plan, charging discontinuity may be produced between end of charging of the first battery and start of charging of the second battery. Then, while charging is discontinuous, energy management by charging is not carried out.

The present disclosure was made to solve the problem above, and an object thereof is to appropriately manage energy depending on a charging condition of a battery by knowing the charging condition of the battery without relying on an SOC of the battery.

A server according to a first point of view of the present disclosure includes a controller that controls charging of a plurality of batteries to successively be carried out. When charging power reduction control is carried out in a subject battery during charging of the subject battery, the controller determines that end of the charging of the subject battery is close.

The inventor of the present application proposes the server above, with attention being paid to the fact that charging power reduction control is carried out immediately before end of charging of a battery. Charging power reduction control refers to control for charging with low electric power until end of charging, with charging power being lowered immediately before end of charging. Exemplary charging power reduction control is such control as charging a battery with a low charging current until a battery voltage reaches an upper limit voltage, with the charging current being lowered when the battery is almost fully charged. Such control is also referred to as forced charging control.

According to the server, a state that end of charging of the subject battery is close can readily and properly be sensed. The server can determine whether or not charging power reduction control has been carried out in the subject battery based on charging power for the subject battery that is being charged. Therefore, the server can determine whether or not end of charging of the subject battery is close without relying on the SOC of the subject battery that is being charged. The server can perform prescribed processing after it determines that end of charging of the subject battery is close and before the end of charging of the subject battery. For example, before end of charging of the subject battery, the server can compensate for decrease in charging power due to charging power reduction control, or can instruct a battery to be charged following the subject battery to start to be charged or to be ready for charging. The server can thus know the charging condition of the battery without relying on the SOC of the battery and can appropriately manage energy depending on the charging condition of the battery.

The controller may be configured to determine that the charging power reduction control has been started in the subject battery when charging power for the subject battery lowers and becomes lower than a first reference value during charging of the subject battery. According to such a configuration, the server can readily and properly sense start of charging power reduction control in the subject battery.

The controller may be configured to determine that charging of the subject battery has ended when the charging power for the subject battery becomes lower than a second reference value smaller than the first reference value after start of charging power reduction control. According to such a configuration, the server can readily and properly sense end of charging of the subject battery. The server may change the subject battery at the time when it determines end of charging of the subject battery and start charging control of a new subject battery.

The server may further include a storage that stores a charging schedule that shows an order of charging of the plurality of batteries. The plurality of batteries may include the subject battery and a next battery, start of charging of the next battery being determined in the charging schedule to follow the charging of the subject battery. The controller may be configured to successively transmit a charging start command for each of the plurality of batteries for energy management of a power grid.

According to the configuration, by starting charging of the next battery instead of the subject battery at the time when charging of the subject battery ends or end of charging is close, sufficient charging power can be secured for a long time period. A new battery may be defined as a new subject battery instead of the subject battery charging of which has ended. Each of the subject battery and the next battery may be a stationary battery or a vehicle-mounted battery.

The controller may be configured to carry out charging of a charging resource connected to the power grid to compensate for decrease in charging power due to the charging power reduction control when the controller determines that end of charging of the subject battery is close. In such a configuration, decrease in charging power due to charging power reduction control of the subject battery is compensated for by the charging resource connected to the power grid. Therefore, constant charging power is readily secured.

The charging resource is configured to store electric power. Any method of storage of electric power (that is, a charging method) is applicable. The charging resource may store electric power (electric energy) as it is or may convert electric power into another type of energy (that is, liquid fuel or gaseous fuel as an energy source) and store resultant energy.

The controller may be configured to perform processing for increasing reserve of the power grid when reserve of the power grid is insufficient at the time when the controller determines that end of charging of the subject battery is close.

When the server changes an object to be charged from the subject battery to a next battery, charging power may lower due to charging power reduction control or charging discontinuity. The server may compensate for such decrease in charging power with reserve. When there is no sufficient reserve, however, it is difficult to compensate for decrease in charging power with reserve. In this connection, when reserve of the power grid is insufficient at the time when end of charging of the subject battery is close, the server performs processing for increasing reserve of the power grid. Insufficiency of reserve is thus suppressed.

Examples of processing for increasing reserve of the power grid include processing for inviting a user of a charging resource to participate in energy management. The server may invite a user of a vehicle not connected to the power grid to connect the vehicle to the power grid. The server may carry out demand response (DR) for increasing reserve of the power grid.

In connection with the server, the subject battery may be a secondary battery mounted on a first vehicle and the next battery may be a secondary battery mounted on a second vehicle. The controller may be configured to determine whether the charging power reduction control has been carried out in the subject battery charged with electric power supplied from the power grid, based on a detection value from a wattmeter that detects electric power supplied from the power grid to the subject battery.

The server can manage energy by using a secondary battery mounted on the vehicle. The secondary battery mounted on the vehicle may store electric power for travel of the vehicle. The vehicle may be an electrically powered vehicle. The electrically powered vehicle refers to a vehicle configured to travel with electric power supplied from a secondary battery mounted thereon. The electrically powered vehicle includes not only a battery electric vehicle (BEV) and a plug-in hybrid electric vehicle (PHEV) but also a fuel cell electric vehicle (FCEV) and a range extender BEV. The wattmeter may be a watt-hour meter (for example, a smart meter) that measures an amount of electric power consumed in a building, a wattmeter contained in electric vehicle supply equipment (EVSE), or a current transformer (CT) sensor provided outside EVSE.

A power management system according to a second point of view of the present disclosure includes a server that controls charging of a plurality of batteries to successively be carried out. The server is configured to successively transmit a charging start command for each of the plurality of batteries. The plurality of batteries include a first subject battery and a second subject battery, charging of the second subject battery being scheduled to be started following the first subject battery. The server is configured to transmit the charging start command for the second subject battery when charging power reduction control is started in the first subject battery that is being charged.

The server transmits a charging start command for the second subject battery when charging power reduction control is started in the first subject battery that is being charged. In other words, the charging start command for the second subject battery is transmitted before end of charging of the first subject battery. Therefore, in the power management system, charging discontinuity is less likely between end of charging of the first subject battery and start of charging of the second subject battery. Each of the first subject battery and the second subject battery may be a stationary battery or a vehicle-mounted battery.

In the power management system, the first subject battery may be a secondary battery mounted on a first vehicle and the second subject battery may be a secondary battery mounted on a second vehicle. The first vehicle may include a first controller that starts prescribed first charging control of the first subject battery based on the charging start command from the server. The second vehicle may include a second controller that starts prescribed second charging control of the second subject battery based on the charging start command from the server.

In the power management system, the controller mounted on the vehicle carries out charging control of the battery mounted on the vehicle. Therefore, processing load imposed on the server involved with charging control is lessened.

The server may be configured to transmit the charging start command to a power feed facility to which a vehicle is connected or an energy management system that manages the power feed facility. Such a server can issue an instruction for starting charging to the first subject battery and the second subject battery via EVSE or an energy management system (EMS). For example, a main body or a charging cable of EVSE may perform a communication function, and the server may transmit a charging start command to EVSE (the main body or the charging cable).

The server may be configured to directly transmit the charging start command to a vehicle through wireless communication and to obtain charging power for the battery mounted on that vehicle from a smart meter. According to such a configuration, the first vehicle and the second vehicle can directly be instructed to start charging of the first subject battery and the second subject battery. The server can obtain charging power for the battery mounted on the vehicle from the smart meter.

Charging control carried out by the controller mounted on the vehicle may be any of three types of charging control shown below. For example, the first controller may implement any of configurations (a) to (c) shown below.
(a) The first controller may be configured to carry out, in the prescribed first charging control, charging control of the first subject battery in an order of first constant power charging, constant voltage charging in which charging power is lowered, and second constant power charging lower in electric power than the first constant power charging. The constant voltage charging and the second constant power charging may be carried out as charging power reduction control.
(b) The first controller may be configured to carry out, in the prescribed first charging control, charging control of the first subject battery in an order of constant current charging and constant voltage charging. The first controller may be configured to start the charging power reduction control in making transition from the constant current charging to the constant voltage charging.
(c) The first controller may be configured to carry out, in the prescribed first charging control, charging control of the first subject battery in an order of first constant power charging and second constant power charging lower in electric power than the first constant power charging. The first controller may be configured to start the charging power reduction control in making transition from the first constant power charging to the second constant power charging.

An energy management method according to a third point of view of the present disclosure is an energy management method of managing energy through charging of a battery. The energy management method includes determining whether charging power reduction control has been carried out in a battery that is being charged and performing processing for compensating for decrease in charging power due to the charging power reduction control when it is determined that the charging power reduction control has been carried out in the battery that is being charged.

According to the energy management method, a charging condition of the battery can be known without relying on the SOC of the battery and energy can appropriately be managed depending on the charging condition of the battery.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a configuration of a vehicle according to an embodiment of the present disclosure.
Fig. 2 is a diagram showing a configuration of a server according to the embodiment of the present disclosure.
Fig. 3 is a diagram showing a schematic configuration of a power management system according to the embodiment of the present disclosure.
Fig. 4 is a diagram for illustrating charging control (a CP1 period, a CV period, and a CP2 period) carried out by a controller of the vehicle according to the embodiment of the present disclosure.
Fig. 5 is a flowchart showing charging control carried out by the controller of the vehicle according to the embodiment of the present disclosure.
Fig. 6 is a diagram showing a modification of transition of charging power shown in Fig. 4.
Fig. 7 is a diagram showing a first modification of charging control carried out by the controller of the vehicle.
Fig. 8 is a diagram showing a second modification of charging control carried out by the controller of the vehicle.
Fig. 9 is a diagram showing an exemplary charging schedule.
Fig. 10 is a diagram showing a plurality of vehicles that prepare for charging in accordance with the charging schedule shown in Fig. 9.
Fig. 11 is a diagram showing exemplary energy management carried out by the server according to the embodiment of the present disclosure.
Fig. 12 is a flowchart showing processing involved with energy management carried out by the controller of the server according to the embodiment of the present disclosure.
Fig. 13 is a flowchart showing details of processing involved with selection of a resource shown in Fig. 12.
Fig. 14 is a flowchart showing a modification of the processing shown in Fig. 12.
Fig. 15 is a diagram showing a first modification of a manner of communication by the server shown in Fig. 2.
Fig. 16 is a diagram showing a second modification of the manner of communication by the server shown in Fig. 2.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated. An energy management system is denoted as an "EMS" below. An electronic control unit mounted on a vehicle is denoted as an "ECU".

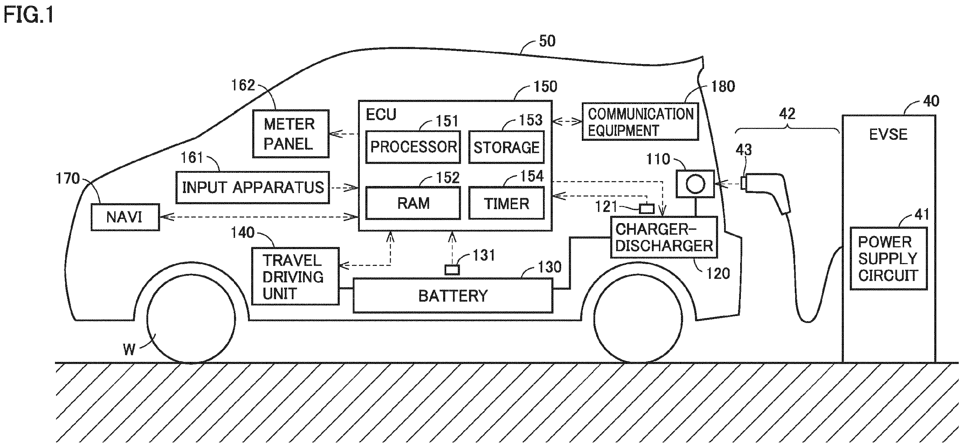

Fig. 1 is a diagram showing a configuration of a vehicle 50 according to this embodiment. Referring to Fig. 1, vehicle 50 includes a battery 130 that stores electric power for traveling. Vehicle 50 can travel with electric power stored in battery 130. Vehicle 50 according to this embodiment is a battery electric vehicle (BEV) not including an engine (internal combustion engine).

Battery 130 includes a secondary battery such as a lithium ion battery or a nickel metal hydride battery. In this embodiment, a battery assembly including a plurality of lithium ion batteries is adopted as the secondary battery. The battery assembly is composed of a plurality of secondary batteries (which are generally also referred to as "cells") electrically connected to one another. Battery 130 according to this embodiment corresponds to an exemplary "battery" according to the present disclosure.

Vehicle 50 includes an ECU 150. ECU 150 carries out charging control and discharging control of battery 130. ECU 150 controls communication with the outside of vehicle 50.

Vehicle 50 further includes a monitoring module 131 that monitors a state of battery 130. Monitoring module 131 includes various sensors that detect a state (for example, a voltage, a current, and a temperature) of battery 130 and outputs a result of detection to ECU 150. Monitoring module 131 may be a battery management system (BMS) that further performs, in addition to the sensor function, a state of charge (SOC) estimation function, a state of health (SOH) estimation function, a function to equalize a battery voltage, a diagnosis function, and a communication function. ECU 150 can obtain a state (for example, a temperature, a current, a voltage, an SOC, and an internal resistance) of battery 130 based on an output from monitoring module 131.

Electric vehicle supply equipment (EVSE) 40 includes a power supply circuit 41 and a charging cable 42. Power supply circuit 41 is contained in a main body of EVSE 40. Charging cable 42 is connected to the main body of EVSE 40. Charging cable 42 may always be connected to the main body of EVSE 40 or may be attachable to and removable from the main body of EVSE 40. Charging cable 42 includes a connector 43 at its tip end and contains a power line.

Vehicle 50 includes an inlet 110 and a charger-discharger 120 for contact charging. Inlet 110 receives electric power supplied from the outside of vehicle 50. Inlet 110 is configured such that connector 43 of charging cable 42 can be connected thereto. As connector 43 of charging cable 42 connected to the main body of EVSE 40 is connected to (plugged into) inlet 110 of vehicle 50, vehicle 50 enters a chargeable state (that is, a state in which the vehicle can receive power feed from EVSE 40). Though Fig. 1 shows only inlet 110 and charger-discharger 120 adapted to a power feed type of EVSE 40, vehicle 50 may include a plurality of inlets so as to adapt to a plurality of types of power feed (for example, an alternating-current (AC) type and a direct-current (DC) type).

Charger-discharger 120 is located between inlet 110 and battery 130. Charger-discharger 120 includes a relay that switches between connection and disconnection of an electric power path from inlet 110 to battery 130 and a power conversion circuit (neither of which is shown). The power conversion circuit may include a bidirectional converter. Each of the relay and the power conversion circuit included in charger-discharger 120 is controlled by ECU 150. Vehicle 50 further includes a monitoring module 121 that monitors a state of charger-discharger 120. Monitoring module 121 includes various sensors that detect a state of charger-discharger 120 and outputs a result of detection to ECU 150. In this embodiment, monitoring module 121 detects a voltage and a current input to and output from the power conversion circuit. Monitoring module 121 detects charging power for battery 130.

Vehicle 50 in the chargeable state is capable of external charging (that is, charging of battery 130 with electric power supplied from EVSE 40) and external power feed (that is, power feed from vehicle 50 to EVSE 40). Electric power for external charging is supplied, for example, from EVSE 40 through charging cable 42 to inlet 110. Charger-discharger 120 converts electric power received at inlet 110 into electric power suitable for charging of battery 130 and outputs resultant electric power to battery 130. Electric power for external power feed is supplied from battery 130 to charger-discharger 120. Charger-discharger 120 converts electric power supplied from battery 130 into electric power suitable for external power feed and outputs resultant electric power to inlet 110. When any of external charging and external power feed is performed, the relay of charger-discharger 120 is closed (connected), and when neither of external charging and external power feed is performed, the relay of charger-discharger 120 is opened (disconnected).

ECU 150 includes a processor 151, a random access memory (RAM) 152, a storage 153, and a timer 154. A computer may be adopted as ECU 150. A central processing unit (CPU) may be adopted as processor 151. RAM 152 functions as a work memory that temporarily stores data to be processed by processor 151. Storage 153 can store information that is put thereinto. Storage 153 includes, for example, a read only memory (ROM) and a rewritable non-volatile memory. Storage 153 stores not only a program but also information (for example, a map, a mathematical expression, and various parameters) to be used by a program. As a program stored in storage 153 is executed by processor 151, various types of control by ECU 150 are carried out in this embodiment. Various types of control by ECU 150 are not limited to control carried out by software but can also be carried out by dedicated hardware (electronic circuitry). Any number of processors may be provided in ECU 150 and a processor may be prepared for each prescribed type of control.

Timer 154 notifies processor 151 that the set time has come. As the time set in timer 154 comes, timer 154 transmits a signal to that effect to processor 151. In this embodiment, a timer circuit is adopted as timer 154. Timer 154 may be implemented by software instead of hardware (timer circuitry). ECU 150 can obtain current time from a real time clock (RTC) circuit (not shown) contained in ECU 150.

Vehicle 50 further includes a travel driving unit 140, an input apparatus 161, a meter panel 162, a navigation system (which is referred to as a "NAVI" below) 170, communication equipment 180, and a drive wheel W. Vehicle 50 is not limited to a front-wheel-drive vehicle shown in Fig. 1 and it may be a rear-wheel-drive vehicle or a four-wheel-drive vehicle.

Travel driving unit 140 includes a power control unit (PCU) and a motor generator (MG) which are not shown, and allows vehicle 50 to travel with electric power stored in battery 130. The PCU includes, for example, an inverter, a converter, and a relay (none of which is shown). The relay included in the PCU is referred to as a "system main relay (SMR)" below. The PCU is controlled by ECU 150. The MG is implemented, for example, by a three-phase AC motor generator. The MG is driven by the PCU and rotates drive wheel W. The PCU drives the MG with electric power supplied from battery 130. The MG performs regeneration and supplies regenerated electric power to battery 130. The SMR switches between connection and disconnection of an electric power path from battery 130 to the MG. The SMR is closed (connected) when vehicle 50 travels.

Input apparatus 161 accepts an input from a user. Input apparatus 161 is operated by a user and outputs a signal corresponding to the operation by the user to ECU 150. Examples of input apparatus 161 include various switches, various pointing devices, a keyboard, and a touch panel. Input apparatus 161 may include a smart speaker that accepts audio input.

Meter panel 162 shows information on vehicle 50. Meter panel 162 shows, for example, various types of information on vehicle 50 measured by various sensors mounted on vehicle 50. Information shown on meter panel 162 may include at least one of an outdoor temperature, a traveling speed of vehicle 50, an SOC of battery 130, average electric power consumption, and a travel distance of vehicle 50. Meter panel 162 is controlled by ECU 150. ECU 150 may have meter panel 162 show a message for a user or a warning indicator when a prescribed condition is satisfied.

NAVI 170 includes a processor, a storage, a touch panel display, and a global positioning system (GPS) module (none of which is shown). The storage stores map information. The touch panel display accepts an input from a user or shows a map and other types of information. The GPS module receives a signal (which is referred to as a "GPS signal" below) from a GPS satellite. NAVI 170 can identify a position of vehicle 50 based on a GPS signal. NAVI 170 conducts a path search for finding a travel route (for example, a shortest route) from the current position of vehicle 50 to a destination based on an input from the user, and shows the travel route found by the path search on a map.

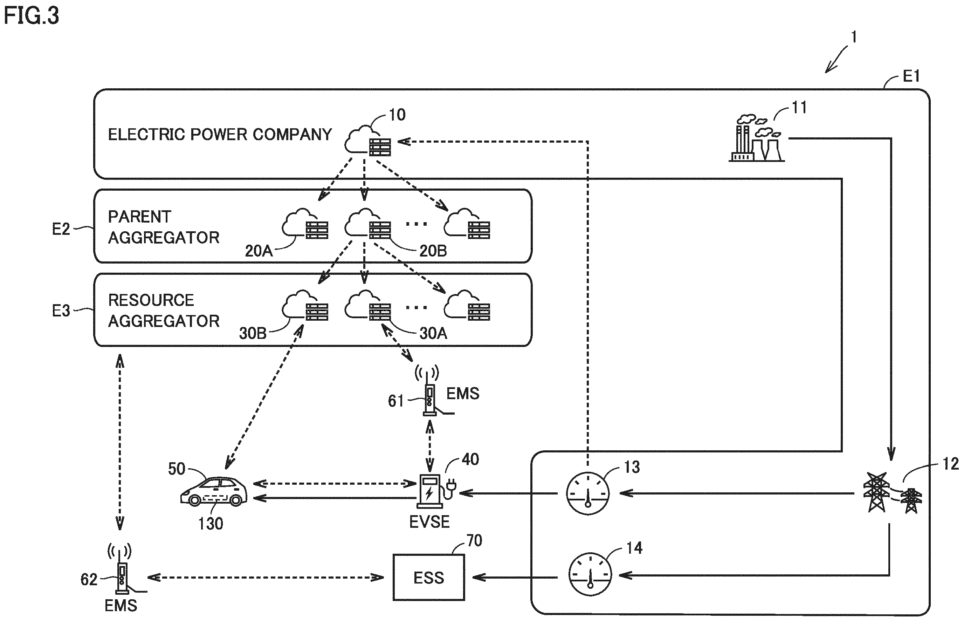

Communication equipment 180 includes various communication interfaces (I/F). ECU 150 is configured to communicate with an EMS 61 (Fig. 3) which will be described later through communication equipment 180. ECU 150 is configured to wirelessly communicate with a server 30B (Fig. 3) which will be described later through communication equipment 180.

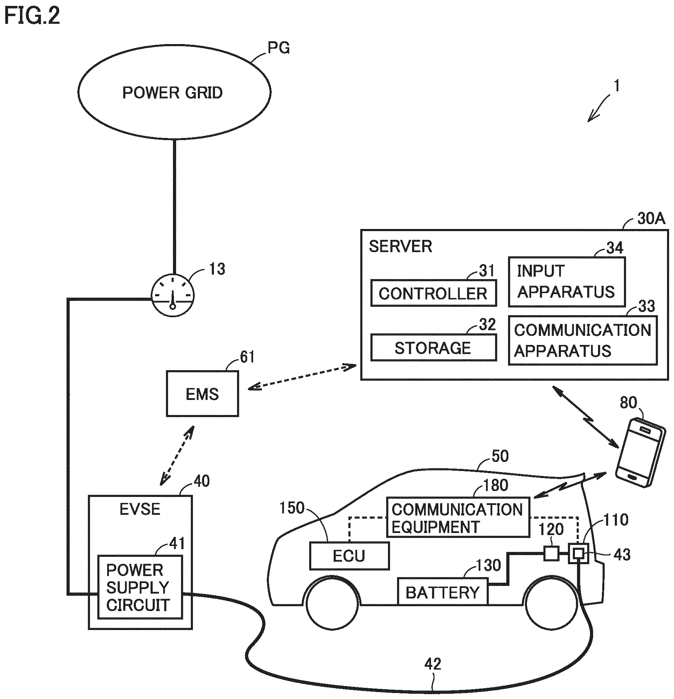

Fig. 2 is a diagram showing a configuration of a server according to this disclosure. Referring to Fig. 2, a power management system 1 includes a power grid PG, a server 30A, EVSE 40, vehicle 50, and a portable terminal 80. Server 30A according to this embodiment corresponds to an exemplary "server" according to the present disclosure.

Vehicle 50 is configured as shown in Fig. 1. In this embodiment, an AC power feed facility that provides AC power is adopted as EVSE 40. Charger-discharger 120 includes a circuit adapted to the AC power feed facility. Without being limited to such a form, EVSE 40 may be a DC power feed facility that provides DC power. Charger-discharger 120 may include a circuit adapted to the DC power feed facility.

Portable terminal 80 corresponds to a terminal carried by a user of vehicle 50. In this embodiment, a smartphone equipped with a touch panel display is adopted as portable terminal 80. Without being limited thereto, any portable terminal can be adopted as portable terminal 80, and a tablet terminal, a wearable device (for example, a smart watch), an electronic key, or a service tool can also be adopted.

Power grid PG is a power grid provided by an electric utility (for example, an electric power company). Power grid PG is electrically connected to a plurality of pieces of EVSE (including EVSE 40) and supplies AC power to each piece of EVSE. Power supply circuit 41 contained in EVSE 40 converts electric power supplied from power grid PG into electric power suitable for external charging. Power supply circuit 41 may include a sensor for detecting charging power.

As the relay of charger-discharger 120 is closed in vehicle 50 in the chargeable state, battery 130 is electrically connected to power grid PG. As electric power is supplied from power grid PG through power supply circuit 41, charging cable 42, and charger-discharger 120 to battery 130, battery 130 is externally charged.

Server 30A does not directly communicate with vehicle 50. In other words, server 30A does not wirelessly communicate with vehicle 50. Server 30A communicates with vehicle 50 with EMS 61 being interposed. EMS 61 communicates with vehicle 50 through EVSE 40 in accordance with a command from server 30A. Communication equipment 180 mounted on vehicle 50 communicates with EVSE 40 through charging cable 42. Communication between EVSE 40 and vehicle 50 may be of any type, and for example, controller area network (CAN) or power line communication (PLC) may be adopted. Standards of communication between EVSE 40 and vehicle 50 may be ISO/IEC15118 or IEC61851.

In this embodiment, communication equipment 180 and portable terminal 80 wirelessly communicate with each other. Communication equipment 180 and portable terminal 80 may communicate with each other through short-range communication such as Bluetooth^{®} (for example, direct communication in a vehicle or within an area around the vehicle).

Server 30A is configured to communicate with portable terminal 80. Prescribed application software (which is simply referred to as an "application" below) is installed in portable terminal 80. Portable terminal 80 is carried by a user of vehicle 50 and can exchange information with server 30A through the application. The user can operate the application, for example, through the touch panel display of portable terminal 80. The user can transmit, for example, scheduled departure time of vehicle 50 to server 30A by operating the application.

Server 30A includes a controller 31, a storage 32, a communication apparatus 33, and an input apparatus 34. A computer may be adopted as controller 31. Controller 31 includes a processor and a storage, performs prescribed information processing, and controls communication apparatus 33. Various types of information can be stored in storage 32. Communication apparatus 33 includes various communication I/Fs. Controller 31 communicates with the outside through communication apparatus 33. Input apparatus 34 accepts an input from a user. Input apparatus 34 provides the input from the user to controller 31.

Fig. 3 is a diagram showing a schematic configuration of power management system 1 according to this embodiment. In this embodiment, power management system 1 functions as a virtual power plant (VPP). The VPP refers to a scheme in which a large number of distributed energy resources (which are also referred to as "DERs" below) are put together according to a sophisticated energy management technology that makes use of the Internet of Things (IoT) and the DERs are remotely controlled as being integrated as if the DERs functioned as a single power plant. In power management system 1, the VPP is implemented by energy management using an electrically powered vehicle (for example, vehicle 50 shown in Fig. 1).

Power management system 1 is a vehicle grid integration (VGI) system. Power management system 1 includes a plurality of electrically powered vehicles and a plurality of pieces of EVSE (each one of them is shown in Fig. 3). Any independent number of electrically powered vehicles and pieces of EVSE may be included in power management system 1, and the number may be set to ten or more or one hundred or more. Power management system 1 may include at least one of a POV and a MaaS vehicle. The POV is a personally owned vehicle. The MaaS vehicle is a vehicle managed by a mobility as a service (MaaS) entity. Power management system 1 may include at least one of non-public EVSE that only a specific user is permitted to use (for example, home EVSE) and public EVSE that a large number of unspecified users are permitted to use. Portable terminal 80 shown in Fig. 2 is carried by each vehicle user. Server 30A in Fig. 3 is the same as server 30A in Fig. 2.

Referring to Fig. 3 together with Fig. 2, power management system 1 includes an electric power company E1, a parent aggregator E2 that establishes contact with electric power company E1, and a resource aggregator E3 that establishes contact with a demand side.

Electric power company E1 serves as a power generation utility and a power transmission and distribution (T&D) utility. Electric power company E1 constructs a power grid (that is, power grid PG shown in Fig. 2) with a power plant 11 and a power T&D facility 12 and maintains and manages power grid PG with a server 10. Power plant 11 includes a power generator that generates electricity and supplies electric power generated by the power generator to power T&D facility 12. Any system for power generation by power plant 11 is applicable. Any of thermal power generation, hydroelectric power generation, wind power generation, nuclear power generation, and solar photovoltaic power generation may be applicable as the system for power generation of power plant 11. Power T&D facility 12 includes a power transmission line, a substation, and an electricity distribution line and transmits and distributes electric power supplied from power plant 11. Each of smart meters 13 and 14 measures an amount of power usage each time a prescribed time period elapses (for example, each time thirty minutes elapse), stores the measured amount of power usage, and transmits the measured amount of power usage to server 10. The smart meter is provided for each demand side (for example, an individual or a company) that uses electric power. Server 10 obtains the amount of power usage for each demand side from the smart meter of each demand side. Electric power company E1 may receive an electricity fee in accordance with the amount of power usage from each demand side. In this embodiment, the electric power company corresponds to a manager of power grid PG.

An electric utility that puts the DERs together to provide an energy management service is referred to as an "aggregator." Electric power company E1, for example, in coordination with an aggregator, can adjust electric power of power grid PG. Parent aggregator E2 includes a plurality of servers (for example, servers 20A and 20B). Servers included in parent aggregator E2 belong to different utilities. Resource aggregator E3 includes a plurality of servers (for example, servers 30A and 30B). Servers included in resource aggregator E3 belong to different utilities. Servers included in parent aggregator E2 will be referred to as a "server 20" below and servers included in resource aggregator E3 will be referred to as a "server 30" below unless they are described as being distinguished from each other. Any independent number of servers 20 and servers 30 may be provided, and the number may be set to five or more or thirty or more.

In this embodiment, a single server 10 issues a request for energy management to a plurality of servers 20 and each server 20 that has received the request from server 10 issues a request for energy management to a plurality of servers 30. Furthermore, each server 30 that has received the request from server 20 issues a request for energy management to a plurality of DER users. Electric power company E1 can issue a request for energy management to a large number of demand sides (for example, vehicle users) using such a hierarchical structure (tree structure). The request may be issued by demand response (DR).

When server 30 receives a request for energy management from server 20, it selects a DER for meeting the request from among DERs registered in server 30. The thus selected DER is also referred to as an "EMDER" below. The EMDER may include a vehicle-mounted battery (for example, battery 130) or a stationary battery (for example, an ESS 70 which will be described later).

Server 30 manages energy in an area under its control. The area under the control by server 30 may be one city (for example, a smart city), a factory, or a university campus. An aggregator closes a contract of energy management with a user of a DER located within the area under the control by server 30. The user who has closed the contract can receive a prescribed incentive by having the DER manage energy in accordance with the request from the aggregator. A prescribed penalty is imposed based on the contract, on a user who did not meet the request in spite of his/her approval to meet the request. The DER and the user thereof obliged to manage energy in the contract are registered in server 30.

After the EMDER is selected, server 30 transmits a command to each EMDER. In response to this command, energy management in accordance with the request from server 20 (for example, adjustment of demand and supply in power grid PG) is carried out.

Server 30 measures an amount of power adjustment (for example, an amount of charging power and/or an amount of discharging power for a prescribed period) for each EMDER with a prescribed watt-hour meter. The amount of power adjustment may be used for calculating an incentive. The prescribed watt-hour meter may be smart meter 13 or 14 or a watt-hour meter (for example, monitoring module 121 shown in Fig. 1) mounted on the vehicle. The watt-hour meter may be provided at any location. The watt-hour meter may be contained in EVSE 40. The watt-hour meter may be attached to a portable charging cable.

In this embodiment, server 30 is configured to receive from server 10, a detection value obtained by each of smart meters 13 and 14. Without being limited as such, server 30 may be configured to obtain the detection value from each of smart meters 13 and 14 directly (without server 10 being interposed).

Smart meter 13 is configured to measure an amount of electric power supplied from power grid PG (that is, the power grid constructed of power plant 11 and power T&D facility 12) shown in Fig. 2 to EVSE 40. In this embodiment, EVSE 40 and EMS 61 are provided in one house. EMS 61 is, for example, a home EMS (HEMS). Smart meter 13 measures an amount of electric power (that is, an amount of electric power used in a household) supplied from power grid PG to that house.

Smart meter 14 is configured to measure an amount of electric power supplied from power grid PG shown in Fig. 2 to an energy storage system (ESS) 70. ESS 70 is a stationary battery configured to be chargeable from and dischargeable to power grid PG. For example, a lithium ion battery, a lead-acid battery, a nickel metal hydride battery, a redox flow battery, or a sodium sulfur (NAS) battery may be adopted as ESS 70.

Server 30A communicates with ESS 70 through an EMS 62. In this embodiment, EMS 62 and ESS 70 are provided in one business entity (for example, a factory or a commercial facility). EMS 62 may be, for example, a factory EMS (FEMS) or a building EMS (BEMS). Smart meter 14 measures an amount of electric power (that is, an amount of electric power used in a business entity) supplied from power grid PG to that business entity.

When server 30A receives a request for energy management from server 20, it manages energy through charging of battery 130 by transmitting a charging start command to vehicle 50 via EMS 61 and EVSE 40. Server 30A may be a server belonging to a house building company or an electric machinery manufacturer. Server 30A may be a server belonging to an automobile manufacturer different from an automobile manufacturer that manufactured vehicle 50.

Server 30B is configured to wirelessly communicate with vehicle 50. When server 30B receives a request for energy management from server 20, it carries out charging of battery 130 by directly transmitting a charging start command to vehicle 50 through wireless communication. During charging of battery 130, server 30B obtains a charging condition (including the SOC) of battery 130 from vehicle 50. Server 30B may be a server belonging to the automobile manufacturer that manufactured vehicle 50.

In power management system 1 as above, server 30B can obtain the charging condition (including the SOC) of battery 130 from vehicle 50. On the other hand, server 30A is unable to obtain the charging condition of battery 130 from vehicle 50. Though details will be described later, server 30A is configured to know the charging condition of battery 130 without relying on the SOC of battery 130.

In charging battery 130 to full charge, ECU 150 of vehicle 50 carries out CP1 charging (first constant power charging) until battery 130 is close to full charge. When battery 130 is close to full charge and a voltage of battery 130 is equal to or higher than an open circuit voltage (OCV) at the time of full charge, storage of electricity in battery 130 with high charging power becomes hard. Therefore, when battery 130 is close to full charge, ECU 150 carries out CP2 charging (second constant power charging) for bringing battery 130 closer to full charge with low charging power after charging power is lowered while it carries out CV charging (constant voltage charging). Periods for which CP1 charging, CV charging, and CP2 charging are carried out are also referred to as a "CP1 period," a "CV period," and a "CP2 period," respectively. Charging power in CP1 charging and charging power in CP2 charging may be denoted as "P31" and "P32", respectively. P32 represents an electric power value smaller than P31. During the CV period, a charging voltage is constant and charging power gradually lowers from P31 to P32. CV charging and CP2 charging according to this embodiment correspond to exemplary "charging power reduction control" according to the present disclosure.

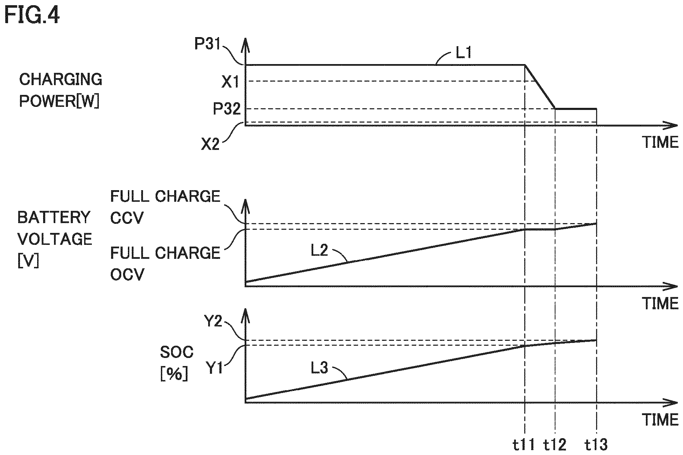

Fig. 4 is a diagram for illustrating the CP1 period, the CV period, and the CP2 period. In Fig. 4, a line L1 represents transition of charging power for battery 130. A line L2 represents transition of a voltage of battery 130 (a battery voltage). A line L3 represents transition of an SOC of battery 130. Each of t11 to t13 represents timing.

Referring to Fig. 4 together with Fig. 1, in this timing chart, a period before t11 corresponds to the CP1 period. When the SOC (line L3) of battery 130 reaches a threshold value Y1 at t11, transition from the CP1 period to the CV period is made. In this embodiment, when the voltage (line L2) of battery 130 attains to the OCV at the time of full charge, the SOC of battery 130 attains to threshold value Y1.

A period from t11 to t12 corresponds to the CV period. In the example shown in Fig. 4, charging power lowers at a constant rate during the CV period. When charging power (line L1) for battery 130 attains to P32 at t12, transition from the CV period to the CP2 period is made. Thereafter, when the SOC (line L3) of battery 130 reaches a threshold value Y2 (for example, 100%) larger than threshold value Y1 at t13, charging ends. In this embodiment, the SOC of battery 130 attains to threshold value Y2 when the voltage (line L2) of battery 130 attains to a closed circuit voltage (CCV) at the time of full charge.

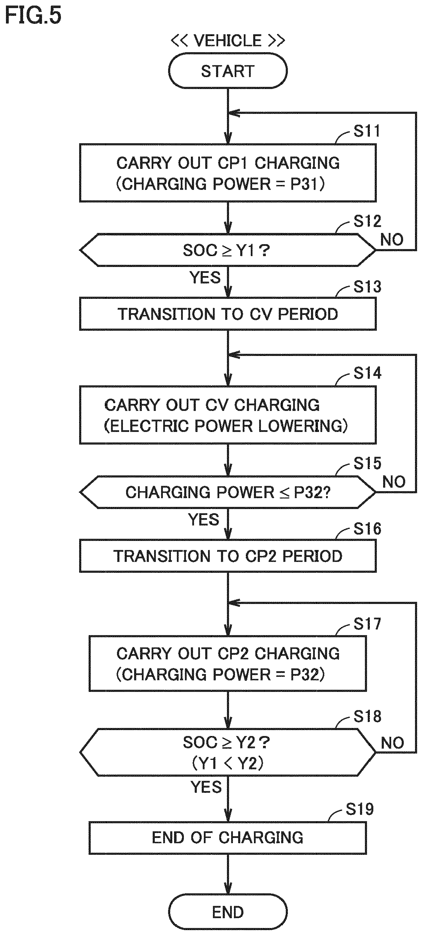

Fig. 5 is a flowchart showing charging control carried out by ECU 150 of vehicle 50. Processing shown in this flowchart is started by ECU 150, for example, when vehicle 50 receives a charging start command from the outside.

Referring to Fig. 5 together with Figs. 1 and 4, in a step (which is simply denoted as "S" below) 11, ECU 150 carries out CP1 charging of battery 130. A period immediately after reception of the charging start command by vehicle 50 falls under the CP1 period. Therefore, CP1 charging is carried out with charging power P31. In succession, in S12, ECU 150 determines whether or not the SOC of battery 130 is equal to or higher than a threshold value Y1. ECU 150 can obtain the SOC of battery 130, for example, based on an output from monitoring module 131. During the CP1 period, CP1 charging (S11) is continuously carried out and the SOC of battery 130 increases. When the SOC of battery 130 is equal to or higher than threshold value Y1 (YES in S12), in S13, ECU 150 quits the CP1 period and makes transition to the CV period.

In S14, ECU 150 carries out CV charging of battery 130. In succession, in S15, ECU 150 determines whether or not charging power for battery 130 is equal to or lower than P32. ECU 150 can obtain charging power for battery 130, for example, based on an output from monitoring module 131. During the CV period, CV charging (S14) is continuously carried out and charging power for battery 130 lowers. Then, when charging power is equal to or lower than P32 (YES in S15), in S16, ECU 150 quits the CV period and makes transition to the CP2 period.

In S17, ECU 150 carries out CP2 charging of battery 130. In succession, in S18, ECU 150 determines whether or not the SOC of battery 130 is equal to or higher than a threshold value Y2. During the CP2 period, CP2 charging (S17) is continuously carried out and the SOC of battery 130 increases. When the SOC of battery 130 is equal to or higher than threshold value Y2 (YES in S18), in S19, ECU 150 quits charging of battery 130 and quits a series of processing in Fig. 5. Charging power for battery 130 is thus set to 0W.

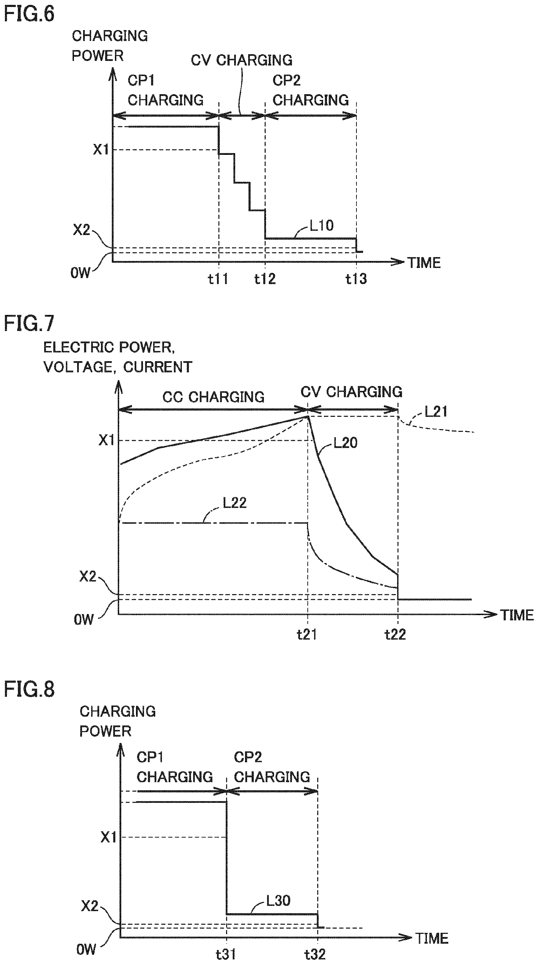

Transition of charging power during charging is not limited to the example shown with line L1 in Fig. 4. Fig. 6 is a diagram showing a modification of transition of charging power shown in Fig. 4. Referring to Fig. 6, as shown with a line L10, a pattern of lowering in charging power during the CV period may be a pattern in which charging power lowers stepwise.

In this embodiment, ECU 150 carries out charging control of battery 130 in the order of CP1 charging, CV charging, and CP2 charging. Without being limited as such, a manner of control can be modified as appropriate.

Fig. 7 is a diagram showing a first modification of charging control carried out by ECU 150 in vehicle 50. In Fig. 7, a line L20, a line L21, and a line L22 represent charging power, a charging voltage, and a charging current, respectively. Referring to Fig. 7, in this modification, ECU 150 carries out charging control of battery 130 in the order of CC charging (constant current charging) and CV charging (constant voltage charging). A period before t21 corresponds to the CC period during which CC charging is carried out. A period from t21 to t22 corresponds to the CV period during which CV charging is carried out. For example, when the SOC of battery 130 becomes equal to or higher than threshold value Y1 at t21, ECU 150 quits the CC period and makes transition to the CV period. ECU 150 starts charging power reduction control at the time when it makes transition from the CC period to the CV period. CV charging according to this modification corresponds to exemplary "charging power reduction control" according to the present disclosure. When the SOC of battery 130 becomes equal to or higher than threshold value Y2 at t22, charging of battery 130 ends.

Fig. 8 is a diagram showing a second modification of charging control carried out by ECU 150 in vehicle 50. As shown with a line L30 in Fig. 8, in this modification, ECU 150 carries out charging control of battery 130 in the order of CP1 charging (first constant power charging) and CP2 charging (second constant power charging) lower in electric power than CP1 charging. A period before t31 corresponds to the CP1 period. A period from t31 to t32 corresponds to the CP2 period. For example, when the SOC of battery 130 is equal to or higher than threshold value Y1 at t31, ECU 150 quits the CP1 period and makes transition to the CP2 period. ECU 150 starts charging power reduction control when it makes transition from the CP1 period to the CP2 period. CP2 charging according to this modification corresponds to exemplary "charging power reduction control" according to the present disclosure. When the SOC of battery 130 is equal to or higher than threshold value Y2 at t32, charging of battery 130 ends.

X1 and X2 in Figs. 4 and 6 to 8 will be described later.

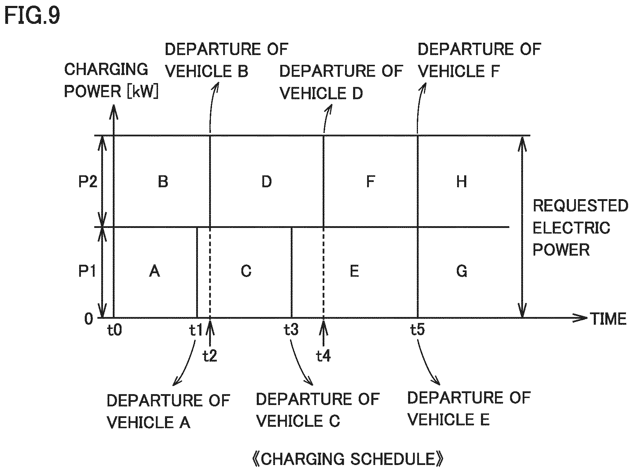

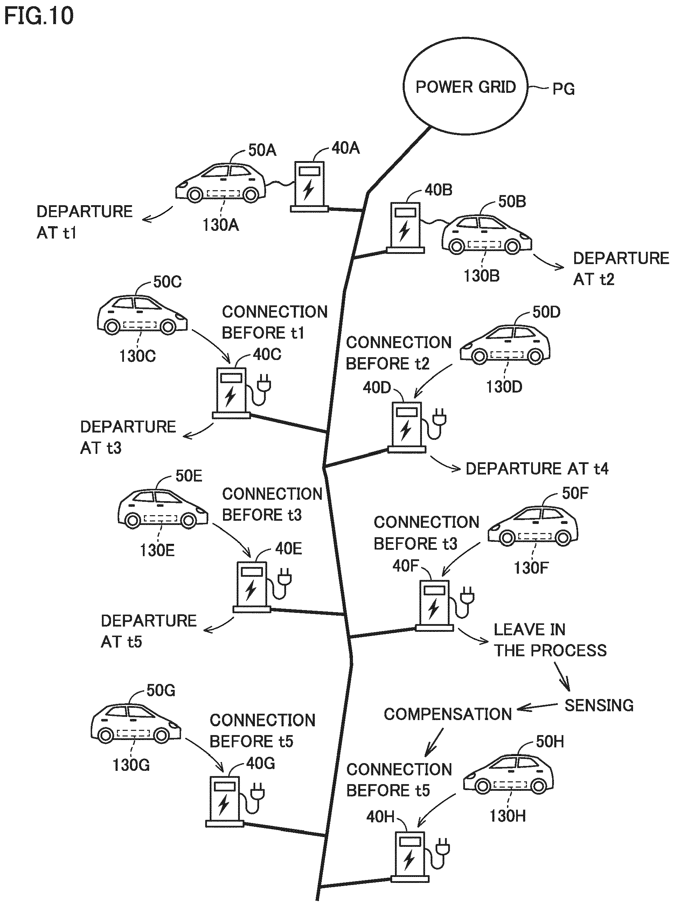

Server 30A according to this embodiment is configured to successively charge batteries (cells) mounted on a plurality of vehicles. The order of charging of the plurality of batteries mounted on the plurality of vehicles is shown in the charging schedule held in server 30A. Fig. 9 is a diagram showing an exemplary charging schedule. Fig. 10 is a diagram showing a plurality of vehicles that prepare for charging in accordance with the charging schedule shown in Fig. 9. Vehicles A to H in Fig. 9 correspond to vehicles 50A to 50H shown in Fig. 10. As shown in Fig. 10, vehicles 50A to 50H include batteries 130A to 130H, respectively. Vehicles 50A to 50H are configured to be connectable to EVSE 40A to EVSE 40H, respectively. Each of EVSE 40A to EVSE 40H is electrically connected to power grid PG and receives supply of electric power from power grid PG. Vehicles 50A to 50H and EVSE 40A to EVSE 40H are configured similarly to vehicle 50 and EVSE 40 shown in Figs. 1 and 2, respectively. Each of vehicles 50A to 50H is referred to as a "vehicle 50" below and each piece of EVSE 40A to EVSE 40H is referred to as "EVSE 40" below, unless they are described as being distinguished from one another. EMS 61 shown in Fig. 2 is provided for each piece of EVSE 40.

Referring to Fig. 9 together with Fig. 2, this charging schedule defines simultaneous charging of two batteries. For example, server 30A creates a charging schedule when it receives a charging request from server 20 (parent aggregator E2). Each battery incorporated in the charging schedule corresponds to the EMDER described previously. In the example shown in Fig. 9, each of batteries 130A to 130H corresponds to the EMDER. The created charging schedule is stored in storage 32. In creating the charging schedule, server 30A may select a battery (EMDER) based on scheduled time of departure of each vehicle 50 and determine the order of charging and charging start timing. After creation of the charging schedule, server 30A may give a prescribed notification to portable terminal 80 carried by the user of each vehicle incorporated in the charging schedule.

In the example shown in Fig. 9, server 30A creates the charging schedule to secure charging power P1 with a first battery and to secure charging power P2 with a second battery, with charging power requested from parent aggregator E2 being divided into charging power P1 and charging power P2. As two batteries (the first battery and the second battery) are simultaneously charged, requested charging power is secured. Requested charging power corresponds to the sum of charging power P1 and charging power P2.

In the charging schedule shown in Fig. 9, each of batteries 130A, 130C, 130E, and 130G corresponds to the first battery, and each of batteries 130B, 130D, 130F, and 130H corresponds to the second battery. In Fig. 9, each of t0 to t5 represents timing. At t0, charging of batteries 130A and 130B is started. Thereafter, when charging of battery 130A ends at t1, charging of battery 130C is started. After t1 as well, at each of timing t2, timing t3, timing t4, and timing t5, charging is successively relayed (end of charging and start of charging). Specifically, at t2, when charging of battery 130B ends, charging of battery 130D is started. At t3, when charging of battery 130C ends, charging of battery 130E is started. At t4, when charging of battery 130D ends, charging of battery 130F is started. At t5, when charging of batteries 130E and 130F ends, charging of batteries 130G and 130H is started.

Referring to Fig. 10 together with Fig. 9, the user of the vehicle connects the vehicle in which the SOC of the vehicle-mounted battery is within a prescribed range (which is referred to as a "start range" below) to EVSE so as to be in time for charging start timing shown in the charging schedule. The vehicle that has finished charging may leave the EVSE and start traveling. In the example shown in Fig. 10, however, charging of battery 130F ends earlier than charging end timing shown in the charging schedule, and vehicle 50F leaves EVSE 40F. For example, when the SOC of battery 130F at the time of start of charging is higher than the start range, charging of battery 130F may end earlier than scheduled. When vehicle 50F leaves in the middle of the process, charging power secured by server 30A may not reach charging power requested by parent aggregator E2.

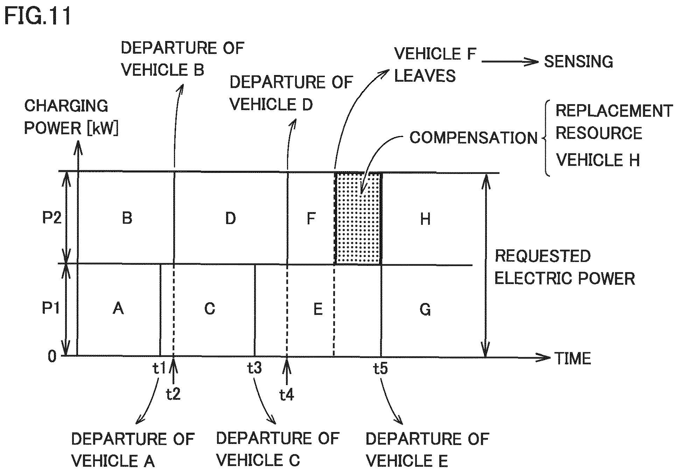

Fig. 11 is a diagram showing exemplary energy management carried out by server 30A. Referring to Fig. 11 together with Fig. 2, server 30A according to this embodiment is configured to sense leaving of vehicle 50F in the middle of the process. Though details will be described later, controller 31 of server 30A determines whether or not end of charging of battery 130F is close based on whether or not charging power reduction control is carried out in battery 130F that is being charged. Specifically, controller 31 determines that end of charging of battery 130F is close when charging power reduction control is carried out in battery 130F that is being charged. When charging of battery 130F ends earlier than scheduled, controller 31 can sense that charging of battery 130F is about to end before end of charging of battery 130F. Therefore, server 30A can compensate for, at early timing, decrease in charging power due to leaving of vehicle 50F in the middle of the process. Insufficiency of charging power is thus less likely.

Server 30A according to this embodiment compensates for insufficiency for requested charging power with a replacement resource (a resource that functions as reserve) or a next battery. When battery 130F is designated as the subject battery, battery 130H charging of which is determined in the charging schedule to start following battery 130F corresponds to the next battery. The replacement resource is a resource connected to power grid PG, a charging schedule of which is not determined, among charging resources controllable by server 30A. In other words, a battery, a charging schedule of which is determined in the charging schedule, does not fall under the replacement resource. At the time when vehicle 50F shown in Fig. 10 leaves, charging of batteries 130A to 130D scheduled in the charging schedule shown in Fig. 9 has already ended and hence batteries 130A to 130D can serve as the replacement resources.

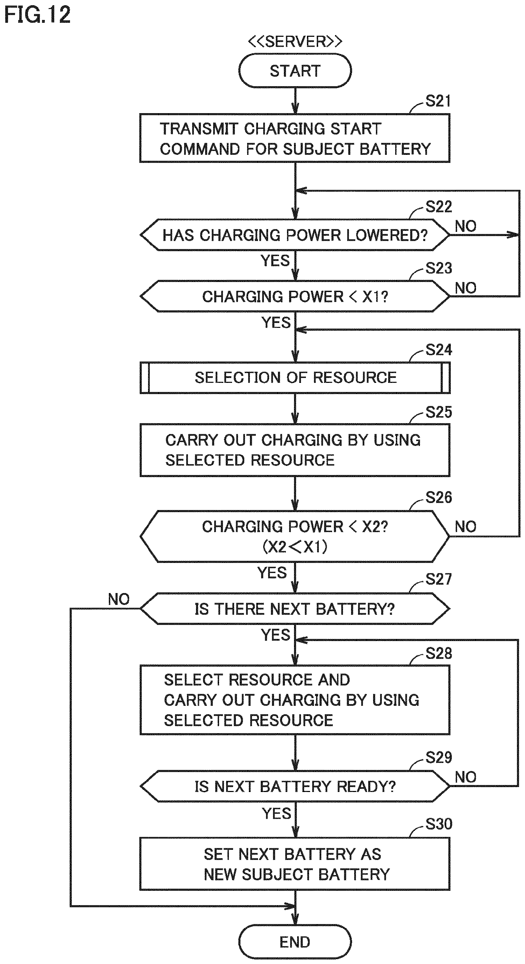

Fig. 12 is a flowchart showing processing involved with energy management carried out by controller 31 of server 30A. Processing shown in this flowchart is started when the subject battery is designated. For example, controller 31 starts energy management based on the charging schedule shown in Fig. 9 by simultaneously setting batteries 130A and 130B as the subject batteries. When battery 130A is set as the subject battery, a series of processing shown in Fig. 12 is performed on battery 130A. When battery 130B is set as the subject battery, the series of processing shown in Fig. 12 is performed on battery 130B. When batteries 130A and 130B are simultaneously set as the subject batteries, processing onto the batteries is performed in parallel and simultaneously proceeds.

Referring to Fig. 12 together with Fig. 2, in S21, controller 31 transmits a charging start command for the subject battery. In this embodiment, the charging start command for the subject battery is transmitted from server 30A to EMS 61, and EMS 61 instructs EVSE 40 to which vehicle 50 including the subject battery is connected to start charging of the subject battery in accordance with the command from server 30A. Therefore, when controller 31 transmits the charging start command for the subject battery, charging of the subject battery is started in the processing shown in Fig. 5. The subject battery is charged with electric power supplied from power grid PG.

In S22, controller 31 determines whether or not charging power for the subject battery that is being charged has lowered. Controller 31 can determine whether or not charging power for the subject battery has lowered, for example, based on a detection value from smart meter 13. Smart meter 13 detects electric power supplied from power grid PG to the subject battery. Smart meter 13 according to this embodiment corresponds to an exemplary "wattmeter" according to the present disclosure. Controller 31 may determine whether or not charging power for the subject battery has lowered based on whether or not an amount of lowering in charging power per unit time for the subject battery is equal to or larger than a prescribed value. Determination in S22 is repeated until charging power for the subject battery lowers. When charging power for the subject battery has lowered (YES in S22), the process proceeds to S23.

In S23, controller 31 determines whether or not charging power for the subject battery that is being charged is lower than a prescribed first reference value (which is denoted as "X1" below). The first reference value (XI) corresponds to X1 in Figs. 4 and 6 to 8. In this embodiment, X1 is set to a value slightly smaller than P31. X1 may be set within a range from a value 0.6 to 0.9 time as large as P31, and set, for example, to a value 0.7 time as large as P31.

In S23, controller 31 determines whether or not charging power for the subject battery is lower than X1, for example, based on a detection value from smart meter 13. Determination in S22 and S23 is repeated until charging power for the subject battery becomes lower than X1. When charging power for the subject battery that is being charged lowers and becomes lower than X1 (YES in both of S22 and S23), the process proceeds to S24.

Controller 31 determines that charging power reduction control has been started in the subject battery that is being charged when charging power for the subject battery that is being charged lowers and becomes lower than X1. Start of charging power reduction control in the subject battery that is being charged means that end of charging of the subject battery is close. Controller 31 according to this embodiment determines that end of charging of the subject battery is close by sensing charging power reduction control carried out in the subject battery. When determination as YES is made in S23, in S24 and S25, controller 31 performs processing for compensating for decrease in charging power due to charging power reduction control.

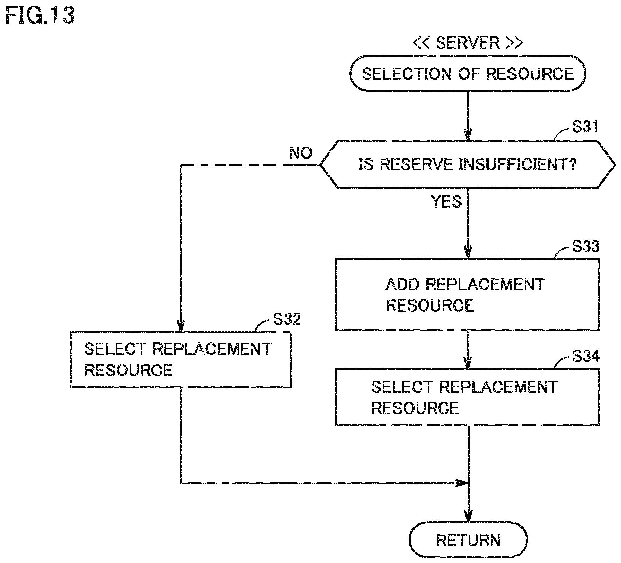

Fig. 13 is a flowchart showing details of S24 in Fig. 12. Referring to Fig. 13 together with Fig. 2, in S31, controller 31 determines whether or not reserve of power grid PG is insufficient. Controller 31 may determine whether or not reserve of power grid PG is insufficient based on whether or not reserve charging capacity of a replacement resource is equal to or smaller than a prescribed value.

When reserve of power grid PG is sufficient (NO in S31), in S32, controller 31 selects a replacement resource for compensation. The replacement resource includes, for example, ESS 70 (Fig. 3). Though Fig. 3 shows only a single ESS 70, a plurality of ESSs 70 are connected to power grid PG. Power grid PG includes a large number of replacement resources. In S32, controller 31 selects replacement resources in number necessary for compensation from among the large number of replacement resources. The replacement resource for power grid PG may include a vehicle-mounted battery other than batteries 130A to 130H (Fig. 10). Since the vehicle-mounted battery is not always connected to power grid PG, in S32, the vehicle-mounted battery may preferentially be selected over the ESS. Controller 31 may notify a user of the selected replacement resource of that fact.

When reserve of power grid PG is insufficient (YES in S31), in S33, controller 31 performs processing for increasing reserve of power grid PG. Controller 31 may give to portable terminal 80 carried by a user of an electrically powered vehicle not connected to power grid PG, a notification inviting the user to connect the electrically powered vehicle to power grid PG. Controller 31 may carry out demand response (DR) for increasing replacement resources.

After processing in S33, in S34, controller 31 selects a replacement resource for compensation.

As the replacement resource is selected in S32 or S34, a series of processing shown in Fig. 13 ends and the process proceeds to S25 in Fig. 12. Referring again to Fig. 12 together with Fig. 2, in S25, controller 31 carries out charging with the replacement resource selected in S32 or S34. Controller 31 carries out charging control (remote control) of the replacement resource such that charging power secured by server 30A attains to charging power (see Fig. 11) requested by parent aggregator E2. Charging by the replacement resource compensates for decrease in charging power due to charging power reduction control. Controller 31 thus carries out charging by the replacement resource (the charging resource connected to power grid PG) to compensate for decrease in charging power due to charging power reduction control when controller 31 determines that end of charging of the subject battery is close (YES in S22 and S23).

In S26, controller 31 determines whether or not charging power for the subject battery that is being charged becomes lower than a prescribed second reference value (which is denoted as "X2" below). X2 represents an electric power value smaller than X1. The second reference value (X2) corresponds to X2 in Figs. 4 and 6 to 8. In this embodiment, X2 is set around 0 W. X2 may be set within a range not lower than 0 W and not higher than 500 W, and set, for example, to 100 W.

In S26, controller 31 determines whether or not charging power for the subject battery becomes lower than X2, for example, based on a detection value from smart meter 13. Processing in S24 to S26 is repeated until charging power for the subject battery is lower than X2. Through processing in S24 and S25, charging by the replacement resource compensates for decrease in charging power due to charging power reduction control carried out in the subject battery. When charging power for the subject battery under charging power reduction control becomes lower than X2 (YES in S26), the process proceeds to S27.

Controller 31 determines that charging of the subject battery ends when charging power for the subject battery becomes lower than X2 (YES in S26) after start of charging power reduction control. When determination as YES is made in S26, in S27, controller 31 determines whether or not there is a next battery by referring to the charging schedule (Fig. 9) stored in storage 32. Absence of the next battery (that is, determination as NO in S27) means that energy management based on the charging schedule has ended. When determination as NO is made in S27, a series of processing shown in Fig. 12 ends.

When determination as YES is made in S27, in S28, controller 31 performs processing for compensating for decrease in charging power due to end of charging of the subject battery. Specifically, in S28, controller 31 selects a replacement resource and carries out charging by using the selected replacement resource. Processing in S28 is the same as the processing in S24 and S25 described previously.

In S29, controller 31 determines whether or not preparation for charging of the next battery has been completed. Controller 31 determines that preparation for charging of battery 130 mounted on vehicle 50 has been completed when vehicle 50 is in a chargeable state. When preparation for charging of the next battery has not been completed (NO in S29), the process returns to S28. Processing in S28 and S29 is repeated until preparation for charging of the next battery is completed. As a result of processing in S28, charging by the replacement resource compensates for decrease in charging power due to end of charging of the subject battery.

When preparation for charging of the next battery has been completed (YES in S29), in S30, controller 31 sets the next battery as the new subject battery. Thereafter, the series of processing shown in Fig. 12 ends. In other words, as the processing in S30 is performed, the series of processing shown in Fig. 12 for the subject battery ends, however, the series of processing shown in Fig. 12 is newly started for the next battery (new subject battery).

In the example shown in Fig. 10, when the series of processing shown in Fig. 12 is performed with battery 130A of vehicle 50A (first vehicle) being designated as the subject battery and end of charging of battery 130A is close, charging power reduction control is carried out in battery 130A (S14 in Fig. 5). Charging power becomes lower than X1 (see Fig. 4) and determination as YES is made in S23. Then, as a result of processing in S24 and S25, charging by the replacement resource compensates for decrease in charging power due to charging power reduction control. Thereafter, when charging of battery 130A ends, determination as YES is made in S26, and in S29, whether or not preparation for charging of battery 130B (next battery) of vehicle 50B (second vehicle) has been completed is determined. Since vehicle 50B is connected to power grid PG before end of charging of battery 130A, determination as YES is made in S29 when charging of battery 130A ends, and in S30, battery 130B is set as the new subject battery. Then, the series of processing shown in Fig. 12 is started with battery 130B being designated as the subject battery.

When the series of processing shown in Fig. 12 is performed with battery 130F of vehicle 50F (first vehicle) being designated as the subject battery, charging of battery 130F ends earlier than charging end timing shown in the charging schedule. Therefore, at the time of end of charging of battery 130F, vehicle 50H (second vehicle) has not yet been connected to power grid PG. Therefore, determination as NO is made in S29, and charging by the replacement resource compensates for decrease in charging power due to end of charging of battery 130F until vehicle 50H is connected to power grid PG (S28). Then, when vehicle 50H is connected to power grid PG (YES in S29), in S30, battery 130H (next battery) is set as the new subject battery and the series of processing shown in Fig. 12 for battery 130H is started.

As described above, server 30A according to this embodiment includes controller 31 that has a plurality of batteries (for example, batteries 130A to 130H) successively charged. Controller 31 is configured to successively transmit charging start commands for the plurality of batteries for energy management of power grid PG. Then, controller 31 is configured to sense that end of charging of the subject battery is close when charging power reduction control is carried out in the subject battery that is being charged (YES in S22 and S23 in Fig. 12). After server 30A determines that end of charging of the subject battery is close, it can perform prescribed processing before end of charging of the subject battery. For example, server 30A compensates for decrease in charging power due to charging power reduction control before end of charging of the subject battery (S24 and S25 in Fig. 12). Server 30A according to this embodiment can know a charging condition of the battery without relying on the SOC of the battery and appropriately manage energy depending on the charging condition of the battery.

The energy management method according to this embodiment includes determining whether or not charging power reduction control is carried out in the battery that is being charged (S22 and S23 in Fig. 12) and performing processing for compensating for decrease in charging power due to charging power reduction control (S24 and S25 in Fig. 12) when it is determined that charging power reduction control is carried out in the battery that is being charged (YES in S22 and S23). According to the energy management method in this embodiment, the charging condition of the battery can be known without relying on the SOC of the battery and energy can appropriately be managed depending on the charging condition of the battery.

In the embodiment, controller 31 of server 30A determines whether or not charging power reduction control is carried out in the subject battery that is being charged based on a detection value from smart meter 13. Without being limited as such, controller 31 of server 30A may determine whether or not charging power reduction control is carried out in the subject battery that is being charged based on a detection value from a wattmeter contained in EVSE 40 or a detection value from a CT sensor provided outside EVSE 40.

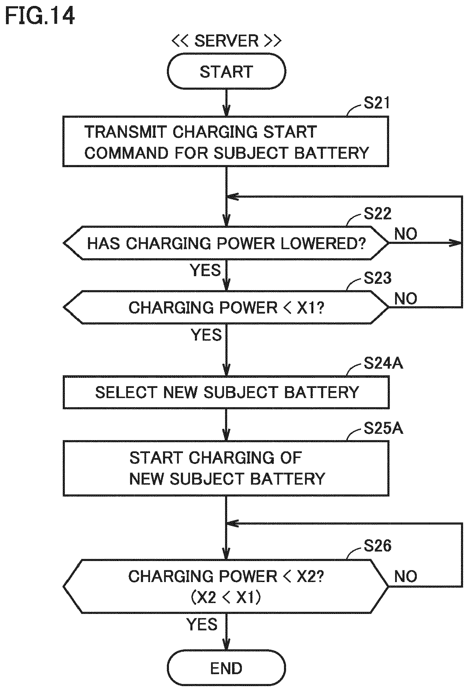

Controller 31 of server 30A may be configured to perform processing shown in Fig. 14 instead of the processing shown in Fig. 12. Fig. 14 is a flowchart showing a modification of the processing shown in Fig. 12. In the processing shown in Fig. 14, S24A and S25A are adopted instead of S24 and S25 in Fig. 12 and S27 to S30 in Fig. 12 are omitted. In this modification, the charging schedule is not used. For example, server 30A selects a first subject battery when it receives a charging request from server 20 (parent aggregator E2) and performs a series of processing shown in Fig. 14 on the first subject battery. Server 30A selects the first subject battery from among replacement resources for power grid PG. As the series of processing shown in Fig. 14 is performed on the first subject battery, energy of power grid PG is managed through charging of the first subject battery. Processing (Fig. 14) according to this modification will be described below with a difference from the processing shown in Fig. 12 being focused on.

Referring to Fig. 14 together with Fig. 2, in S21, controller 31 of server 30A transmits a charging start command for the first subject battery. The first subject battery may be battery 130 of the first vehicle configured similarly to vehicle 50 shown in Fig. 1. ECU 150 (a first controller) of the first vehicle starts prescribed first charging control of the first subject battery based on the charging start command from server 30A. Prescribed first charging control is, for example, control shown in Figs. 4 and 5. Without being limited as such, prescribed first charging control may be control shown in Fig. 7 or 8.

When charging power reduction control is started in the first subject battery that is being charged, determination as YES is made in S22 and S23, and the process proceeds to S24A. In S24A, controller 31 selects a second subject battery (a new subject battery) from among the replacement resources for power grid PG. The second subject battery corresponds to a battery (that is, a battery that is charged in succession to the first subject battery) charging of which is to be started following the first subject cell in relay charging. Then, in S25A, controller 31 performs the series of processing shown in Fig. 14 onto the second subject battery. Processing (Fig. 14) involved with charging of the first subject battery and processing (Fig. 14) involved with charging of the second subject battery are performed in parallel and simultaneously proceed.

In processing involved with charging of the first subject battery, after processing in S25A, in S26, controller 31 determines whether or not charging power for the first subject battery becomes lower than X2. While charging power for the first subject battery is not lower than X2 (NO in S26), controller 31 determines that charging of the first subject battery is continuing. When charging power becomes lower than X2 (YES in S26), controller 31 determines that charging of the first subject battery has ended. When determination as YES is made in S26, processing (Fig. 14) involved with charging of the first subject battery ends.

Processing involved with charging of the second subject battery is started before end of charging of the first subject battery. Then, in S21, controller 31 transmits the charging start command for the second subject battery. The second subject battery may be battery 130 of the second vehicle configured similarly to vehicle 50 shown in Fig. 1. ECU 150 (a second controller) of the second vehicle may be started up in response to reception of the charging start command for the second subject battery. ECU 150 of the second vehicle starts prescribed second charging control of the second subject battery based on the charging start command from server 30A. Prescribed second charging control is, for example, control shown in Figs. 4 and 5. Without being limited as such, prescribed second charging control may be control shown in Fig. 7 or 8.

Immediately after start of charging of the second subject battery, charging is carried out in both of the first subject battery and the second subject battery. Controller 31 may indicate in the charging start command for the second subject battery that rise of charging power be made gentler such that the sum of charging power for the first subject battery and charging power for the second subject battery does not exceed charging power requested by parent aggregator E2.

Thereafter, when charging power reduction control is started in the second subject battery that is being charged, determination as YES is made in S22 and S23 and the process proceeds to S24A. Processing in S24A or later is similar to processing involved with charging of the first subject battery. In other words, a new subject battery (a third subject battery) is selected in S24A also in processing involved with charging of the second subject battery.

Server 30A according to the modification is configured to transmit the charging start command for the second subject battery when charging power reduction control is started in the first subject battery that is being charged (YES in S22 and S23). In such a configuration, the charging start command for the second subject battery is transmitted before end of charging of the first subject battery, and therefore discontinuity of charging is less likely. The power management system including server 30A according to the modification corresponds to an exemplary "power management system" according to the present disclosure.

In the embodiment and the modification, server 30A is configured to transmit the charging start command to the energy management system (EMS) that manages EVSE (power feed facility) to which the vehicle is connected (Fig. 2). Without being limited as such, the server may transmit the charging start command to EVSE or to a vehicle directly (without the EMS and the EVSE being interposed).

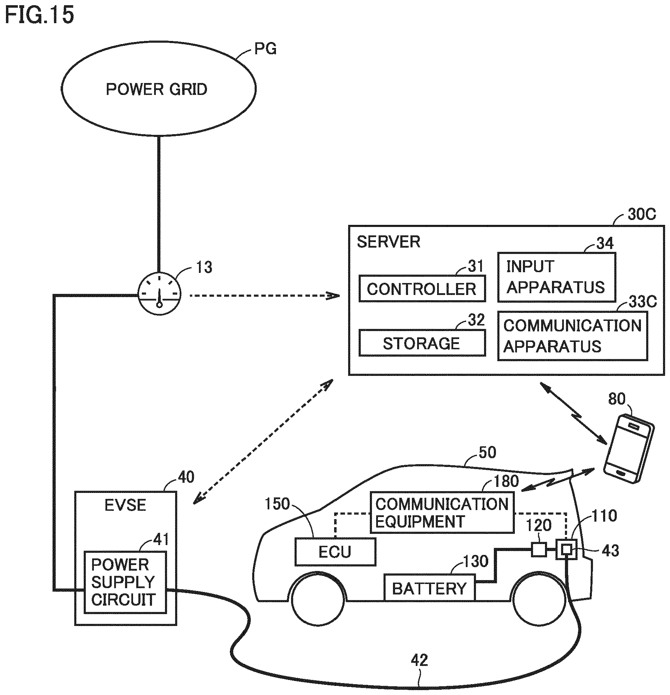

Fig. 15 is a diagram showing a first modification of a manner of communication by the server shown in Fig. 2. Referring to Fig. 15, a server 30C is configured to directly transmit the charging start command to EVSE 40. Server 30C includes a communication apparatus 33C for communication with EVSE 40. EVSE 40 includes a communication apparatus (not shown) for communication with server 30C. The communication apparatus of EVSE 40 may be mounted on the main body of EVSE 40 or may be provided in charging cable 42. Communication between server 30C and EVSE 40 may be wired or wireless. Server 30C transmits the charging start command for the subject battery (battery 130) to EVSE 40 connected to vehicle 50 including the subject battery, for example, in S21 in Fig. 12 or 14. EVSE 40 instructs vehicle 50 to start charging of the subject battery in accordance with the command from server 30C. Server 30C obtains charging power for the subject battery mounted on vehicle 50 from smart meter 13. EVSE 40 may communicate with an EVSE management cloud. A protocol of communication between EVSE 40 and the EVSE management cloud may be open charge point protocol (OCPP).

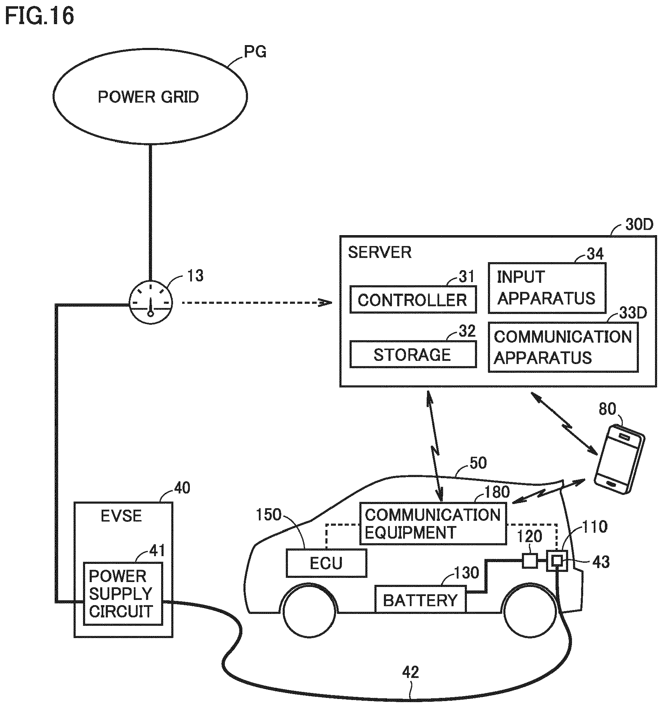

Fig. 16 is a diagram showing a second modification of the manner of communication by the server shown in Fig. 2. Referring to Fig. 16, a server 30D is configured to directly transmit the charging start command to vehicle 50 through wireless communication. Server 30D includes a communication apparatus 30D for wireless communication with vehicle 50. Communication equipment 180 of vehicle 50 includes a communication I/F for communication with server 30D. Communication equipment 180 may include a data communication module (DCM). Server 30D transmits, for example, in S21 in Fig. 12 or 14, the charging start command for the subject battery (battery 130) directly to vehicle 50 while vehicle 50 including the subject battery is connected to EVSE 40. ECU 150 of vehicle 50 starts prescribed charging control of the subject battery in accordance with the charging start command from server 30D. Server 30D obtains charging power for the subject battery mounted on vehicle 50 from smart meter 13.

In the embodiment and the modifications, when charging power for the subject battery that is being charged lowers and becomes lower than the first reference value (XI), the server determines that charging power reduction control has been started in the subject battery that is being charged. A method of determining whether or not charging power reduction control is carried out in the subject battery, however, is not limited to the method described above. For example, the server may determine whether or not charging power reduction control is carried out based on a pattern of lowering in charging power (a behavior in lowering of charging power). The server may learn behaviors of charging power while charging power reduction control is carried out. Alternatively, the server may determine whether or not charging power reduction control is carried out based on a behavior of at least one of a charging current and a charging voltage. The server may learn behaviors of at least one of the charging current and the charging voltage while charging power reduction control is carried out. The server may determine whether or not charging power reduction control is carried out by using a trained model obtained by machine learning using artificial intelligence (AI). Learning may be done for each battery (for each vehicle). According to such a method, even when charging power is not stable, erroneous sensing of charging power reduction control due to fluctuation in charging power is less likely.

The embodiment and various modifications may be carried out as being combined in any manner. For example, controller 31 may accept an input from a user so as to allow the user to adopt any control mode. Controller 31 may be configured to allow the user to select any of control shown in Fig. 12 (a first control mode) and control shown in Fig. 14 (a second control mode) through input apparatus 34.

The electric power company may be divided for each business sector. A power generation utility and a power T&D utility may belong to companies different from each other. One aggregator may serve as both of the parent aggregator and the resource aggregator. The server may receive a request for energy management from a power market.

It is not essential that a plurality of vehicles that successively carry out charging of batteries in a relayed manner are similarly configured. The plurality of vehicles different in model may successively carry out charging of batteries in the relayed manner.

A configuration of the vehicle is not limited to the configuration shown in Fig. 1. For example, the vehicle may be capable only of external charging, of external charging and external power feed. The vehicle may be configured to be wirelessly chargeable. The vehicle is not limited to a passenger car, and a bus or a truck may be applicable. The vehicle is not limited to a BEV, and a PHEV may be applicable. The vehicle may be an autonomous vehicle or may perform a flying function. The vehicle may be a vehicle that can travel without human intervention (for example, an automated guided vehicle (AGV) or an agricultural implement).

Though an embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A server (30A, 30C, 30D) comprising:
a controller (31) that controls charging of a plurality of batteries (130A to 130H) to successively be carried out, wherein
when charging power reduction control is carried out in a subject battery (130) during charging of the subject battery, the controller determines that end of the charging of the subject battery is close.

2. The server according to claim 1, wherein
when charging power for the subject battery lowers and becomes lower than a first reference value (XI) during charging of the subject battery, the controller determines that the charging power reduction control has been started in the subject battery that is being charged.

3. The server according to claim 2, wherein
when the charging power for the subject battery becomes lower than a second reference value (X2) smaller than the first reference value after start of the charging power reduction control, the controller determines that charging of the subject battery has ended.

4. The server according to any one of claims 1 to 3, further comprising a storage (32) that stores a charging schedule that shows an order of charging of the plurality of batteries, wherein
the plurality of batteries include the subject battery and a next battery, start of charging of the next battery being determined in the charging schedule to follow the charging of the subject battery, and
the controller is configured to successively transmit a charging start command for each of the plurality of batteries for energy management of a power grid (PG).

5. The server according to claim 4, wherein
when the controller determines that end of charging of the subject battery is close, the controller carries out charging of a charging resource (70, 130) connected to the power grid to compensate for decrease in charging power due to the charging power reduction control.

6. The server according to claim 4 or 5, wherein
when reserve of the power grid is insufficient at time when the controller determines that end of charging of the subject battery is close, the controller performs processing for increasing reserve of the power grid.

7. The server according to any one of claims 4 to 6, wherein
the subject battery is a secondary battery (130A to 130F) mounted on a first vehicle (50A to 50F),
the next battery is a secondary battery (130C to 130H) mounted on a second vehicle (50C to 50H), and
the controller is configured to determine whether the charging power reduction control has been carried out in the subject battery charged with electric power supplied from the power grid, based on a detection value from a wattmeter that detects electric power supplied from the power grid to the subject battery.

8. A power management system comprising:
a server (30A, 30C, 30D) that controls charging of a plurality of batteries (130A to 130H) to successively be carried out, wherein
the server is configured to successively transmit a charging start command for each of the plurality of batteries,
the plurality of batteries include a first subject battery (130A to 130F) and a second subject battery (130C to 130H), charging of the second subject battery being scheduled to be started following the first subject battery, and
the server is configured to transmit the charging start command for the second subject battery when charging power reduction control is started in the first subject battery that is being charged.

9. The power management system according to claim 8, wherein
the first subject battery is a secondary battery mounted on a first vehicle (50A to 50F),
the second subject battery is a secondary battery mounted on a second vehicle (50C to 50H),
the first vehicle includes a first controller (150) that starts prescribed first charging control of the first subject battery based on the charging start command from the server, and
the second vehicle includes a second controller (150) that starts prescribed second charging control of the second subject battery based on the charging start command from the server.

10. The power management system according to claim 9, wherein
the server transmits the charging start command to a power feed facility (40) to which a vehicle (50) is connected or an energy management system that manages the power feed facility.

11. The power management system according to claim 9, wherein
the server directly transmits the charging start command to a vehicle (50) through wireless communication, and
the server obtains charging power for a battery (130) mounted on that vehicle from a smart meter (13).

12. The power management system according to any one of claims 9 to 11, wherein
the first controller carries out, in the prescribed first charging control, charging control of the first subject battery in an order of first constant power charging, constant voltage charging in which charging power is lowered, and second constant power charging lower in electric power than the first constant power charging, and
the constant voltage charging and the second constant power charging fall under the charging power reduction control.

13. The power management system according to any one of claims 9 to 11, wherein
the first controller carries out, in the prescribed first charging control, charging control of the first subject battery in an order of constant current charging and constant voltage charging, and
the first controller starts the charging power reduction control in making transition from the constant current charging to the constant voltage charging.

14. The power management system according to any one of claims 9 to 11, wherein
the first controller carries out, in the prescribed first charging control, charging control of the first subject battery in an order of first constant power charging and second constant power charging lower in electric power than the first constant power charging, and
the first controller starts the charging power reduction control in making transition from the first constant power charging to the second constant power charging.

15. An energy management method of managing energy through charging of a battery (130), the energy management method comprising:
determining whether charging power reduction control has been carried out in a battery that is being charged; and
performing processing for compensating for decrease in charging power due to the charging power reduction control when it is determined that the charging power reduction control has been carried out in the battery that is being charged.
